# EUROPEAN PATENT APPLICATION

(11) **EP 4 550 936 A1**
(43) Date of publication of application: **07.05.2025**
(21) Application number: 23846780.7
(22) Date of filing: 30.05.2023
(51) Int. Cl.: H05B 6/66, H02M 3/04, H02M 7/539, H05B 6/64

(54) **ELECTRONIC DEVICE FOR OUTPUTTING ELECTRIC FIELD**

(30) Priority: 29.07.2022 KR 20220094435
(71) Applicant: Samsung Electronics Co., Ltd., Suwon-si, Gyeonggi-do 16677 (KR)
(72) Inventor: CHOI, Bohwan, Suwon-si Gyeonggi-do 16677 (KR); GOH, Taedong, Suwon-si Gyeonggi-do 16677 (KR); KIM, Jihoon, Suwon-si Gyeonggi-do 16677 (KR); RYU, Youngho, Suwon-si Gyeonggi-do 16677 (KR); CHO, Minsik, Suwon-si Gyeonggi-do 16677 (KR); CHOI, Jinsoo, Suwon-si Gyeonggi-do 16677 (KR)
(74) Representative: Appleyard Lees IP LLP
(86) International application number: PCT/KR2023/007391
(87) International publication number: WO 2024/025119

(57) **Abstract**

According to embodiments, an electronic device may comprise: a load circuit including a plurality of electrodes; a converter configured to convert the magnitude of direct current power; at least one driving circuit configured to output alternating current power to the load circuit by using the direct current power provided from the converter; a temperature sensor for measuring the temperature of an object arranged between the plurality of electrodes; and a controller. The controller may be configured to identify the object arranged between the plurality of electrodes. The controller may be configured to control the converter and/or the at least one driving circuit such that first power of a first frequency is output to the load circuit from a time point when the temperature of the object exceeds a first reference value. The controller may be configured to control the converter and/or the at least one driving circuit such that the magnitude of the first power output to the load circuit increases, on the basis of checking that the temperature of the object increases from less than the first reference value to the first reference value while the first power is output.

## Description

### [Technical Field]

Embodiments of the present invention relate to an electronic device outputting an electric field.

### [Background Art]

When high-frequency power of several tens of MHz is applied to an object (e.g., an object to be heated), a high-frequency electric field is generated so that polar molecules in the object are rotated or vibrated.

The technology of applying high-frequency power of several tens of MHz to an object (e.g., a heated object) is similar to the principle of the conventional microwave oven, but by operating at a lower frequency than that used in the microwave oven, keep the properties inside the object uniform. It may be applied to food care (e.g., defrost, aging, drying, sterilization), clothing care (e.g., drying), skin care, brand-new drying methods, or carbon capture using the nature of uniform heating.

### [Detailed Description of the Invention]

### [Technical Solution]

According to an embodiment, an electronic device may comprise a load circuit including a plurality of electrodes, a converter configured to convert a magnitude of DC power, at least one driving circuit configured to output AC power to the load circuit using the DC power provided from the converter, a temperature sensor measuring a temperature of an object disposed between the plurality of electrodes, and at least one controller. The at least one controller may be configured to identify the object placed between the plurality of electrodes. The at least one controller may be configured to control the converter and/or the at least one driving circuit to output first power of a first frequency to the load circuit from a time when the temperature of the object exceeds a first reference value. The at least one controller may be configured to control the converter and/or the at least one driving circuit to increase a magnitude of the first power output to the load circuit based on identifying that the temperature of the object increases from less than the first reference value to the first reference value while the first power is output.

According to an embodiment, a method for operating an electronic device may comprise identifying an object disposed between a plurality of electrodes included in a load circuit of the electronic device. The method may comprise outputting first power of a first frequency to the load circuit using at least one driving circuit of the electronic device and a converter of the electronic device from a time when a temperature of the object exceeds a first reference value. The method may comprise increasing the magnitude of the first power output to the load circuit using the converter based on identifying that the temperature of the object increases from less than the first reference value to the first reference value while the first power is output.

According to an embodiment, in a computer-readable recording medium storing instructions configured to perform at least one operation by at least one controller of an electronic device, the at least one operation may comprise identifying an object disposed between a plurality of electrodes included in a load circuit of the electronic device. The at least one operation may comprise outputting first power of a first frequency to the load circuit using at least one driving circuit of the electronic device and a converter of the electronic device from a time when a temperature of the object exceeds a first reference value. The at least one operation may comprise increasing the magnitude of the first power output to the load circuit using the converter based on identifying that the temperature of the object increases from less than the first reference value to the first reference value while the first power is output.

### [Brief Description of the Drawings]

FIG. 1 is a view for describing a power amplifier according to an embodiment;
FIG. 2 is a view illustrating operations of an electronic device according to an embodiment;
FIG. 3 is a block diagram illustrating an electronic device according to an embodiment;
FIG. 4 is a view illustrating operations of an electronic device according to an embodiment;
FIG. 5 is a view illustrating operations of an electronic device according to an embodiment;
FIG. 6 is a flowchart illustrating an operation method of an electronic device according to an embodiment;
FIG. 7 is a view illustrating operations of an electronic device according to an embodiment; and
FIG. 8 is a flowchart illustrating an operation method of an electronic device according to an embodiment.

### [Mode for Carrying out the Invention]

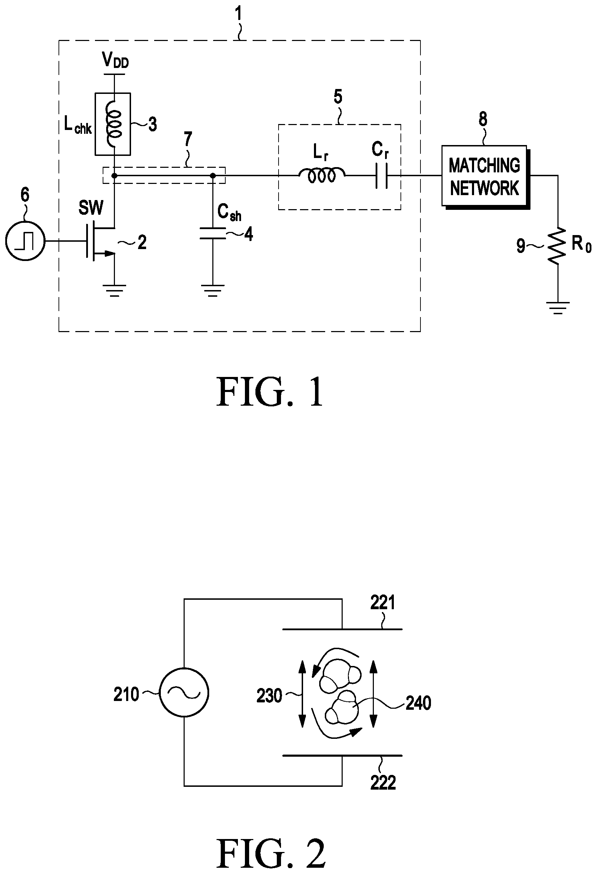

FIG. 1 is a view for describing a power amplifier according to an embodiment.

The power amplifier 1 may include a transistor 2, a radio frequency (RF) choke inductor (Lchk) 3, a shunt capacitor (Csh) 4, and a serial LC resonance circuit 5. The shunt capacitor 4 and the serial LC resonance circuit 5 may comprise a load network of the power amplifier 1.

The transistor 2 may operate by receiving a driving voltage VDD from an input power source, and may be turned on or off by receiving an input signal 6 (or a control signal) in a pulse form (e.g., a square wave) through an input terminal (e.g., a gate). For example, the transistor 2 may include a bipolar junction transistor (BJT) or a metal oxide semiconductor field effect transistor (MOSFET). As illustrated in FIG. 1, when the transistor 2 is an N-channel MOSFET (N-MOS), the input signal 6 may be a gate voltage applied to the gate terminal of the N-channel MOSFET. The source of the transistor 2 may be connected to a ground, and the drain thereof may be connected to an output node 7.

The RF choke inductor 3 may block the transfer of the RF signal from the input power source to the transistor 2 so that only the DC current is transferred to the transistor 2.

The shunt capacitor 4 may be connected in parallel with the transistor 2 and may be discharged or charged while the transistor 2 is turned on or off. The shunt capacitor 4 may be a separate capacitor connected in parallel with the transistor 2, and may be described as including an internal capacitance (e.g., drain-source capacitance Cds) of the transistor 2.

RF power may be generated based on the transistor 2 being turned on or off according to the input signal 6, and the generated RF power may be transferred to the serial LC resonance circuit 5 through the output node 7. More specifically, when the transistor 2 is turned on (e.g., when the transistor 2 is saturated), the transistor 2 may be electrically shorted and thus be interpreted as a short circuit for the ground connected to the source, and the voltage of the output node 7 may be interpreted as zero. The current flowing to the transistor 2 through the RF choke inductor 3 may gradually increase. Thereafter, when the transistor 2 is turned off, the current flowing through the RF choke inductor 3 is directed to the shunt capacitor 4, and as the shunt capacitor 4 is gradually charged, the voltage of the output node 7 (e.g., the voltage across two opposite ends of the shunt capacitor 4) may increase until the maximum value is reached. Thereafter, as the shunt capacitor 4 is gradually discharged, a current flows from the shunt capacitor 4 to the serial LC resonance circuit 5 through the output node 7, and the voltage of the output node 7 (e.g., the voltage across two opposite ends of the shunt capacitor 4) may gradually decrease. In the power amplifier 1, for a high-efficiency operation (e.g., to minimize the power consumed by the transistor 2), the transistor 2, the shunt capacitor 4, and the input signal 6 may be configured so that, after the transistor 2 is turned off and before the transistor 2 is turned on again (e.g., before the current starts to flow again to the transistor 2 through the RF choke inductor 3), the voltage of the output node 7 (e.g., the voltage across two opposite ends of the shunt capacitor 4 and the drain-source voltage of the transistor 2) gradually decreases to 0 and the amount of change in which the voltage of the output node 7 decreases becomes 0. Thereafter, when the transistor 2 is turned on again, the current flowing through the RF choke inductor 3 may be directed to the transistor 2, and the voltage of the output node 7 may be maintained at zero while the transistor 2 is in the on state. As described above, as the drain-source voltage (e.g., the voltage of the output node 7) of the transistor 2 is 0 while the transistor 2 is in the on state and the current flowing through the RF choke inductor 3 is directed to the shunt capacitor 4 while the transistor 2 is in the off state, the current flowing to the transistor 2 through the RF choke inductor 3 is 0 (in other words, a period in which the drain-source voltage of the transistor 2 is non-zero and a period in which the drain-source current is non-zero do not overlap), and thus, the power consumed in the transistor 2 is ideally 0, enabling a high-efficiency operation of the transistor 2. However, in a non-ideal case, since the power amplifier 1 generates a signal (or RF power) based on the transistor 2 being turned on or off, the generated signal (or RF power) may include not only a desired frequency component (e.g., a fundamental component of the operating (resonant) frequency) but also a harmonic component of the second order or more, and power consumption may occur in the transistor 2 due to the harmonic component of the second order or more.

As described above, a current may flow from the RF choke inductor 3 to the transistor 2 or the shunt capacitor 4, or a current may flow from the shunt capacitor 4 to the serial LC resonance circuit 5 based on the transistor 2 being turned on or off according to the input signal 6 in the power amplifier 1, thereby generating an alternating current (AC) current. The generated AC current may be output to the outside (e.g., the matching network 8 and/or the load 9) through the serial LC resonance circuit 5, thereby generating an AC voltage in the load 9. The above-described generation of the AC current based on the above-described transistor 2 being turned on or off may be described as generation of a signal (or RF power) based on the transistor 2 being turned on or off.

The serial LC resonance circuit 5 may include an inductor Lr and a capacitor Cr connected in series with each other, and unlike illustrated, the serial LC resonance circuit 5 may include two or more inductors and two or more capacitors. The serial LC resonance circuit 5 may be configured to have a resonant frequency corresponding to (e.g., identical to) the operating frequency so as to resonate with the operating frequency of the input signal 6. For example, the serial LC resonance circuit 5 may be designed to include an inductor Lr and a capacitor Cr having an inductance value and a capacitance value so that the reactance value of the equivalent impedance of the serial LC resonance circuit 5 becomes 0 at the operating frequency of the input signal 6.

The matching network 8 may be connected to an output terminal of the power amplifier 1 (e.g., connected in series to the serial LC resonance circuit 5), and may provide impedance matching for matching the output impedance of the power amplifier 1 to the load 9.

The load 9 may include at least one hardware component (e.g., a circuit element) that receives, or operates by receiving, a signal (or RF power) generated by the power amplifier 1.

FIG. 2 is a view illustrating operations of an electronic device according to an embodiment.

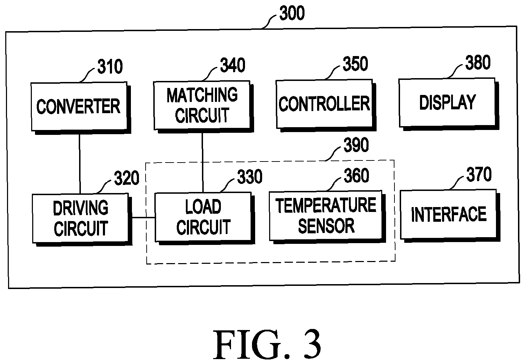

An electronic device (e.g., the electronic device 300 of FIG. 3) may include a high-frequency power source 210 and a plurality of electrodes 221 and 222. A high-frequency electric field 230 may be provided between the first electrode 221 and the second electrode 222 by the high-frequency power source 210. The polar molecules 240 in the object positioned between the first electrode 221 and the second electrode 222 may be rotated and/or vibrated by the high-frequency electric field 230. An electronic device (e.g., the electronic device 300 of FIG. 3) may control freezing of the object disposed between the first electrode 221 and the second electrode 222 by providing the high-frequency electric field 230 between the first electrode 221 and the second electrode 222. For example, the electronic device (e.g., the electronic device 300 of FIG. 3) may provide a high-frequency electric field 230 between the first electrode 221 and the second electrode 222, thereby controlling supercooling of the object disposed between the first electrode 221 and the second electrode 222 or performing an operation of storing the object at a pre-freezing point.

An electronic device (e.g., the electronic device 300 of FIG. 3) may heat the object disposed between the first electrode 221 and the second electrode 222 by providing the high-frequency electric field 230 between the first electrode 221 and the second electrode 222. The object may be heated by the motion of the polar molecules 240 in the object. The polar molecules 240 in the object may be positioned on the surface and inside of the object, and the portion where the object is heated may be determined according to the position where the polar molecules 240 are disposed in the object. The object may be uniformly heated due to the motion of the polar molecules 240 in the object.

FIG. 3 is a block diagram illustrating an electronic device according to an embodiment.

Referring to FIG. 3, an electronic device 300 according to an embodiment may include a converter 310, a driving circuit 320, a load circuit 330, a matching circuit 340, a controller 350, a temperature sensor 360, an interface 370, a display 380, and a camera 390.

The operation of the electronic device 300 may be an operation by the controller 350. The controller 350 may control at least one component included in the electronic device 300. The operation of the electronic device 300 may be that at least one component included in the electronic device 300 is controlled by the controller 350.

The converter 310 may convert the magnitude of DC power and output it. The converter 310 may convert the magnitude of the DC power applied to the converter 310 and output the converted DC power to the driving circuit 320. The controller 350 may control the converter 310 so that the magnitude of the DC power output from the converter 310 is changed.

The driving circuit 320 may output AC power to the load circuit 330 using DC power provided from the converter 310. The controller 350 may control the load circuit 330 so that the frequency of the AC power output from the driving circuit 320 is changed. The electronic device 300 may include a single driving circuit 320, or may include a plurality of driving circuits 320. For example, when the electronic device 300 controls the driving circuit 320, it may be understood as controlling at least one driving circuit 320. According to an embodiment, the driving circuit 320 may include a transistor (e.g., the transistor 2 of FIG. 1) and/or a gate power source (e.g., the gate power source providing the input signal 6 of FIG. 2). According to an embodiment, the gate power source (e.g., the gate power source providing the input signal 6 of FIG. 2) may be described in concept as providing an input signal (e.g., a gate voltage) to the transistor (e.g., the transistor 2 of FIG. 1). According to an embodiment, an inductor (e.g., the choke inductor 3 of FIG. 1) and/or a capacitor (e.g., the shunt capacitor 4 of FIG. 1) may be included in the driving circuit 320. Alternatively, an inductor (e.g., the choke inductor 3 of FIG. 1) and/or a capacitor (e.g., the shunt capacitor 4 of FIG. 1) may be understood as elements separate from the driving circuit 320. According to an embodiment, the electronic device 300 may not include an inductor (e.g., the choke inductor 3 of FIG. 1). According to an embodiment, the driving circuit 320 may be the power amplifier 1 of FIG. 1. According to an embodiment, the driving circuit 320 may be implemented as a full-bridge inverter including four switches. According to an embodiment, the driving circuit 320 may be implemented as a half-bridge inverter including two switches. The driving circuit 320 is a circuit that outputs AC power to the load circuit 330 using DC power provided from the converter 310, and there is no limitation on the implementation scheme of the driving circuit 320.

The load circuit 330 may include a plurality of electrodes (e.g., the first electrode 221 and the second electrode 222 of FIG. 2). An electric field may be provided between the plurality of electrodes (e.g., the first electrode 221 and the second electrode 222 of FIG. 2) by the AC power provided to the load circuit 330. The supercooling of the target object disposed between the first electrode 221 and the second electrode 222 may be controlled by the electric field provided between the plurality of electrodes (e.g., the first electrode 221 and the second electrode 222 of FIG. 2). The pre-freezing point storage operation of the target object disposed between the first electrode 221 and the second electrode 222 may be performed by the electric field provided between the plurality of electrodes (e.g., the first electrode 221 and the second electrode 222 of FIG. 2). The target object disposed between the first electrode 221 and the second electrode 222 may be heated by the electric field provided between the plurality of electrodes (e.g., the first electrode 221 and the second electrode 222 of FIG. 2). Supercooling, pre-freezing point storage, and heating have been described in FIG. 2. According to an embodiment, the load circuit 330 may include at least one capacitor. At least some of at least one capacitor included in the load circuit 330 may include at least some of a plurality of electrodes (e.g., the first electrode 221 and the second electrode 222 of FIG. 2). FIG. 2 illustrates an embodiment in which two electrodes are provided, but the number of electrodes is not limited.

The matching circuit 340 may perform impedance matching. The matching circuit 340 may include at least one inductor. At least one inductor included in the matching circuit 340 may include a variable inductor. As inductance of the variable inductor included in the matching circuit 340 is changed, impedance matching may be performed. For example, the inductance of the variable inductor included in the matching circuit 340 may be changed by being deformed by a motor, but there is no limit to the way the inductance is changed. The matching circuit 340 may include at least one capacitor (e.g., a variable capacitor). The controller 350 may control the matching circuit 340 to perform impedance matching. The controller 350 may control the matching circuit 340 to perform impedance matching in a state in which an object is disposed between a plurality of electrodes (e.g., the first electrode 221 and the second electrode 222 of FIG. 2) of the load circuit 330.

The temperature sensor 360 may measure an internal temperature of the electronic device 300. The temperature sensor 360 may measure the temperature of at least one of the components of the electronic device 300. The temperature sensor 360 may measure the temperature of an object disposed inside the electronic device 300. The temperature sensor 360 may measure the temperature of an object disposed between the plurality of electrodes (e.g., the first electrode 221 and the second electrode 222 in FIG. 2) of the load circuit 330. The electronic device 300 may perform at least one operation according to temperature information provided by the temperature sensor 360. The electronic device 300 may monitor the temperature (e.g., the temperature inside the electronic device 300, the temperature of at least one of the components of the electronic device 300, and/or the temperature of the object disposed inside the electronic device 300) through the temperature sensor 360, and perform at least one operation according to the monitored temperature.

The interface 370 may include at least one input device. The interface 370 may be a device that receives the user input from the user of the electronic device 300. For example, the interface 370 may be a keyboard, mouse, or touch screen, and there is no limitation on the type of interface 370. The electronic device 300 may perform at least one operation based on a user input through the interface 370.

The display 380 may include at least one output device. The display 380 may be a device that displays a screen so that the user of the electronic device 300 may recognize it. Although the interface 370 and the display 380 are described as separate components, the interface 370 and the display 380 may be implemented as one component.

The camera 390 may include a device for obtaining an image. The camera 390 may include a device that identifies a code (e.g., a QR code, a barcode). The camera 390 may be a device capable of identifying the inside of the electronic device 300. The electronic device 300 may identify the inside of the electronic device 300 using the camera 390. The electronic device 300 may identify an object disposed inside the electronic device 300 using the camera 390. The electronic device 300 may identify whether an object is disposed at a point inside the electronic device 300 through the camera 390. The electronic device 300 may identify the type of an object disposed at a point inside the electronic device 300 through the camera 390. The electronic device 300 may identify the characteristics of an object disposed at a point inside the electronic device 300 through the camera 390. For example, the electronic device 300 may identify an object (e.g., whether the object is disposed, the type of the object, and/or the characteristics of the object) disposed at a point inside the electronic device 300 (e.g., between the plurality of electrodes (e.g., the first electrode 221 and the second electrode 222 of FIG. 2) of the load circuit 330) based on the image obtained through the camera 390. For example, the electronic device 300 may identify an object (e.g., whether the object is disposed, the type of the object, and/or the characteristics of the object) disposed at a point inside the electronic device 300 (e.g., between the plurality of electrodes (e.g., the first electrode 221 and the second electrode 222 of FIG. 2) of the load circuit 330) based on the code information (e.g., QR code information or barcode information) obtained through the camera 390.

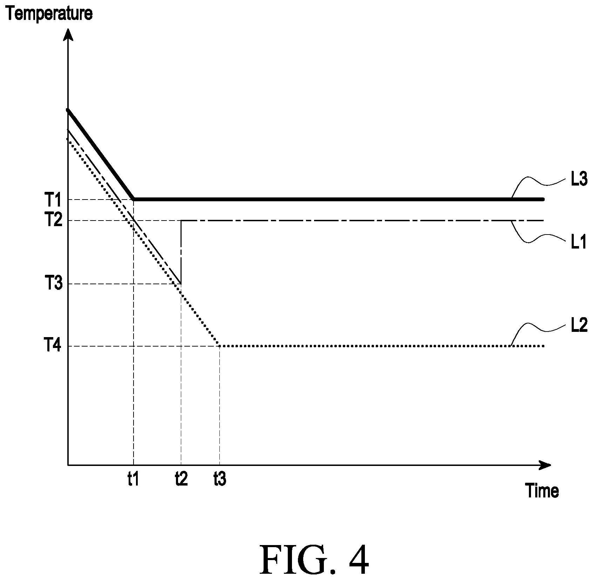

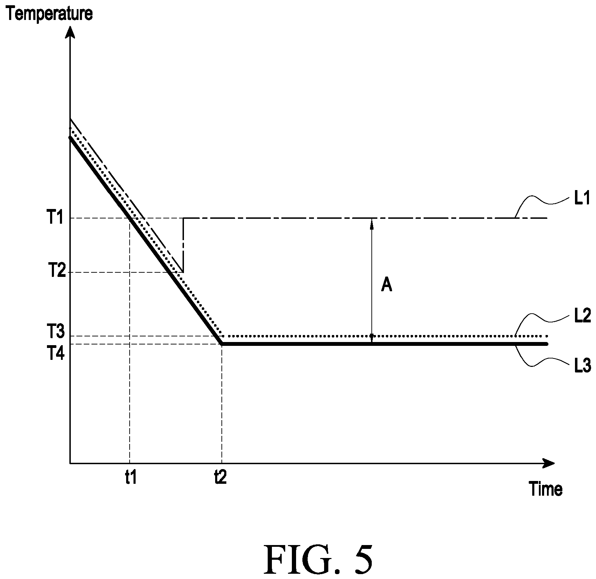

FIG. 4 is a view illustrating operations of an electronic device according to an embodiment. FIG. 5 is a view illustrating operations of an electronic device according to an embodiment.

Referring to FIGS. 4 and 5, the operation mode of the electronic device 300 may be understood. For example, the electronic device 300 may be a device (e.g., a refrigerator or a freezer) for cooling an object. The operation mode of the electronic device 300 may be a mode for controlling cooling of an object disposed inside the electronic device 300. For example, the operation mode of the electronic device 300 may include a pre-freezing point storage mode and a supercooling mode. For example, FIG. 4 may be a view illustrating a pre-freezing point storage mode among the operation modes of the electronic device. For example, FIG. 5 may be a view illustrating a supercooling mode among the operation modes of the electronic device. FIGS. 4 and 5 may be graphs showing a change in temperature over time of an object disposed inside the electronic device 300. However, those skilled in the art may understand that the operation of the electronic device 300 described in the disclosure may be applied to devices other than devices for cooling objects.

In FIG. 4, L1 may be a general "freezing curve". L1 of FIG. 5 may be a general freezing curve, as shown in L1 of FIG. 4. The general "freezing curve" may be a curve representing a change in temperature in a process in which moisture inside the object freezes as the object cools when the temperature around the object is below the freezing point of the object. Referring to L1 of FIG. 4, when the freezing point of the object is T2, the temperature of the object may gradually decrease from a temperature above T2, then decrease to T3 below T2, rapidly increase to T2, and then maintain T2 for a predetermined time. Although L1 of FIG. 4 is not shown in the graph after the temperature of the object is maintained at T2, the temperature of the object may be maintained at T2 and then may decrease to a temperature less than T2 depending on the temperature around the object.

In FIG. 5, L2 may be an ideal "electric field supercooling curve". L2 of FIG. 4 may be an ideal electric field supercooling curve, as shown in L2 of FIG. 5. The ideal electric field supercooling curve may be a curve representing a change in temperature in a process in which the object is supercooled by an electric field provided to the object rather than following the general cooling curve. Referring to L2 of FIG. 5, when the freezing point of the object is T1, the temperature of the object may gradually decrease at a temperature over T1, then decrease to T3 less than T1, and maintain T3 for a predetermined time. In an ideal electric field supercooling curve, while the temperature of the object remains at T3, the moisture inside the object may not be frozen but may remain supercooled.

Referring to FIG. 4, when the electronic device 300 operates in the pre-freezing point storage mode, an object (e.g., a target object) disposed between the plurality of electrodes (e.g., the first electrode 221 and the second electrode 222 of FIG. 2) of the load circuit 330 of the electronic device 300 may follow a temperature curve of L3. For example, when the freezing point of the target object is T2, and the electronic device 300 operates in the pre-freezing point storage mode, the temperature of the target object may begin to drop at a temperature exceeding the freezing point T2, and may maintain T2, or T1 exceeding T2. Maintaining the temperature of the target object at T2, or T1 exceeding T2 may be referred to as pre-freezing point storage. In this case, T1 may be a value that is larger than the freezing point T2 of the target object but in which the difference between T1 and T2 is a predetermined value or less. For example, referring to L3 of FIG. 4, when the electronic device 300 operates in the pre-freezing point storage mode, the object (e.g., the target object) disposed between the plurality of electrodes (e.g., the first electrode 221 and the second electrode 222 in FIG. 2) of the load circuit 330 of the electronic device 300 may be decreased in temperature to the first time t1 by the temperature around the object but, rather than decreasing below the freezing point T2, maintain the temperature T1 equal to or higher than the freezing point T2, maintaining the pre-freezing point state without the moisture inside the object frozen.

Referring to FIG. 5, when the electronic device 300 operates in the supercooling mode, the object (e.g., the target object) disposed between the plurality of electrodes (e.g., the first electrode 221 and the second electrode 222 of FIG. 2) of the load circuit 330 of the electronic device 300 may follow a temperature curve of L3. For example, when the freezing point of the target object is T1, and the electronic device 300 operates in the supercooling mode, the temperature of the target object may begin to drop from a temperature above the freezing point T1 and maintain a temperature below the freezing point T4. When the temperature (e.g., T4) below the freezing point T1 of the target object is maintained, the difference between the temperature (e.g., T4) of the target object and the freezing point T1 may be referred to as "supercooling magnitude". For example, referring to L3 of FIG. 5, when the electronic device 300 operates in the supercooled mode, the object (e.g., the target object) disposed between the plurality of electrodes (e.g., the first electrode 221 and the second electrode 222 in FIG. 2) of the load circuit 330 of the electronic device 300 may pass through the freezing point T2 of the object at the first time point t1 due to the temperature around the object, and the temperature continuously drops, but by maintaining a temperature below the freezing point (e.g., T4), maintain the supercooling state without the moisture inside the object frozen.

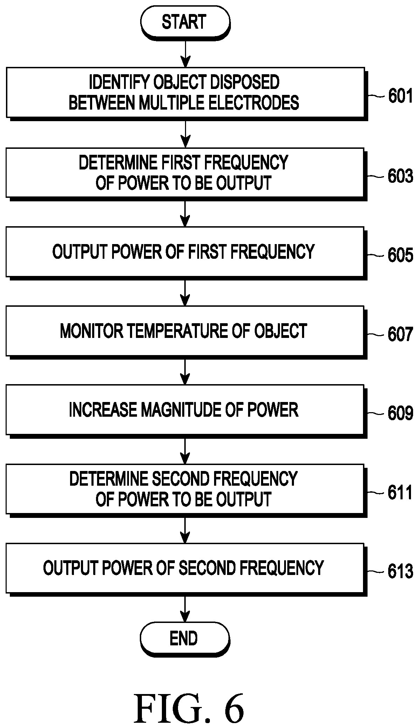

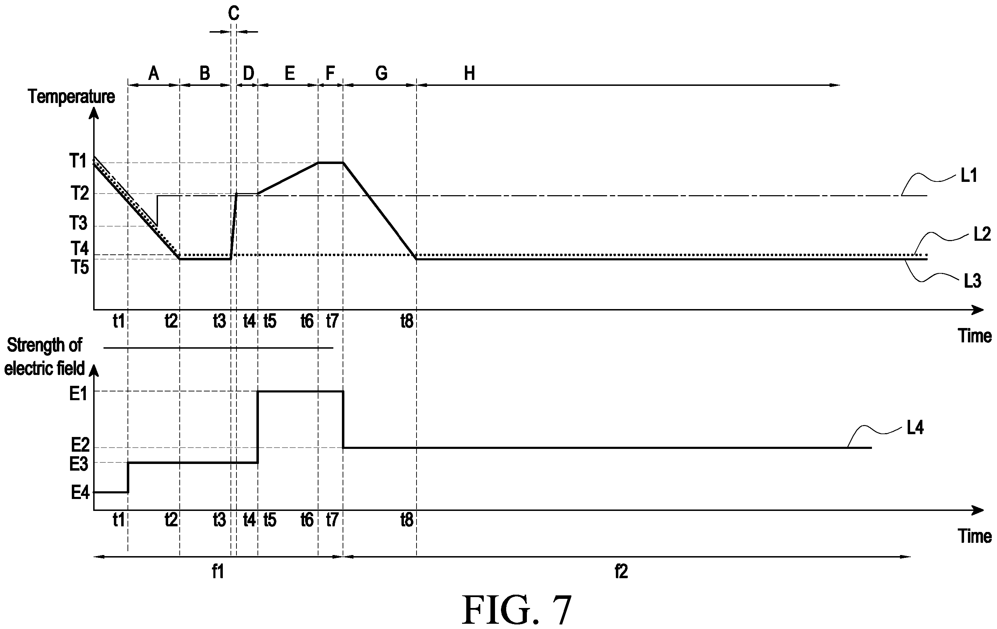

FIG. 6 is a flowchart illustrating an operation method of an electronic device according to an embodiment. FIG. 6 may be described with respect to FIGS. 3 and 7. FIG. 7 is a view illustrating operations of an electronic device according to an embodiment.

The recovery operation of the electronic device 300 may be understood with reference to FIG. 6. The recovery operation of the electronic device 300 may be an operation for monitoring the temperature of the object inside the electronic device 300 while the electronic device 300 operates in the pre-freezing point mode or the supercooling mode, and according to the monitoring result, freezing of the object may be addressed.

FIG. 6 illustrates the recovery operation of the electronic device 300 in the supercooling mode, but the recovery operation in the pre-freezing point mode may also be understood similarly to FIG. 6.

L1 of FIG. 7 may be a general freezing curve. L2 of FIG. 7 may be an ideal electric field supercooling curve. L3 of FIG. 7 may be a result of monitoring the temperature of the object (e.g., the target object) disposed between the plurality of electrodes (e.g., the first electrode 221 and the second electrode 222 of FIG. 2) of the electronic device 300. L4 of FIG. 7 may be a curve representing the strength of an electric field provided between the plurality of electrodes (e.g., the first electrode 221 and the second electrode 222 in FIG. 2). The strength of the electric field provided between the plurality of electrodes (e.g., the first electrode 221 and the second electrode 222 of FIG. 2) may be determined according to the strength of the power output from the driving circuit 320 to the load circuit 330.

Referring to FIG. 6, in operation 601, according to an embodiment, the electronic device 300 (e.g., the controller 350) may identify the object (e.g., the target object) disposed between the plurality of electrodes (e.g., the first electrode 221 and the second electrode 222 of FIG. 2). For example, the electronic device 300 may identify whether the target object is disposed. For example, the electronic device 300 may identify the type of the target object. For example, the electronic device 300 may identify the characteristics of the target object. A method for identifying whether the target object is disposed, the type of the target object, or the characteristics of the target object has been described with reference to FIG. 3. For example, the electronic device 300 may determine whether the target object is disposed, the type of the target object, and/or the characteristics of the target object based on a user input through the interface 370 or information about the object identified through the camera 390.

In operation 603, according to an embodiment, the electronic device 300 may determine the frequency (e.g., a first frequency) of power to be output. The electronic device 300 may determine the first frequency of power to be output from the driving circuit 320 to the load circuit 330 based on the object (e.g., a target object) identified in operation 601. For example, the electronic device 300 may determine the first frequency of power to be output from the driving circuit 320 to the load circuit 330 according to the type of the target object. According to an embodiment, when the target object is classified into a first group (e.g., fruit), the electronic device 300 may determine a frequency corresponding to the first group as the first frequency of power to be output from the driving circuit 320 to the load circuit 330. When the target object is classified into a second group (e.g., meat), the electronic device 300 may determine a frequency corresponding to the second group as the first frequency of power to be output from the driving circuit 320 to the load circuit 330. According to an embodiment, for each of when the target object is classified into a first type (e.g., apple) in the first group (e.g., fruit), and when the target object is classified into a second type (e.g., orange) in the first group (e.g., fruit), the electronic device 300 may determine a different frequency as the first frequency of power to be output from the driving circuit 320 to the load circuit 330. For example, a frequency corresponding to a specific group (e.g., fruit or meat) or a specific type (e.g., apple, or orange) may be an optimal frequency designated based on the dielectric properties (e.g., permittivity) between the liquid and solid states of an object corresponding to a specific group (e.g., fruit or meat) or a specific type (e.g., apple, or orange). For example, at a frequency corresponding to a specific group (e.g., fruit or meat) or a specific type (e.g., apple, or orange), the permittivity of the liquid state of the object corresponding to a specific group (e.g., fruit or meat) or a specific type (e.g., apple, or orange) may be larger than the permittivity of the solid state. For example, a frequency corresponding to a specific group (e.g., fruit or meat) or a specific type (e.g., apple, or orange) may be a frequency in which the permittivity of a liquid state of an object corresponding to a specific group (e.g., fruit or meat) or a specific type (e.g., apple, or orange) is n times the permittivity of a solid state (e.g., n is a real number larger than 1). According to an embodiment, the electronic device 300 may determine a preset frequency (e.g., a general frequency) as the first frequency of power to be output from the driving circuit 320 to the load circuit 330 based on identifying that the object is disposed between the plurality of electrodes (e.g., the first electrode 221 and the second electrode 222) regardless of whether the target object is classified into the first group (e.g., fruit) or the second group (e.g., meat) or whether the target object is classified into the first type (e.g., apple) or the second type (e.g., orange). In this case, it may be understood that operation 603 of the electronic device 300 is omitted.

In operation 605, according to an embodiment, the electronic device 300 may output the determined power of the first frequency from the driving circuit 320 to the load circuit 330. The electronic device 300 may control the converter 310 and the driving circuit 320 to output the first power of the first frequency to the load circuit 330 from the time when the temperature of the object (e.g., the target object) identified in operation 601 exceeds a reference value (e.g., the freezing point of the target object). For example, referring to FIG. 7, the electronic device 300 may control the converter 310 and the driving circuit 320 to output the first power of the first frequency f1 to the load circuit 330 from the time when the temperature of the target object exceeds the freezing point T2 (i.e., from before the first time t1).

In operation 607, according to an embodiment, the electronic device 300 may monitor the temperature of the object (e.g., the target object) disposed between the plurality of electrodes (e.g., the first electrode 221 and the second electrode 222 of FIG. 2). The electronic device 300 may continuously monitor the temperature of the target object. The electronic device 300 may monitor the temperature of the target object and the temperature around the target object. The electronic device 300 may perform at least one operation according to the temperature of the target object and/or the temperature around the target object. Operation 607 is not limited as being performed after operation 605 is performed. For example, operation 607 may be performed after operation 601 is performed. For example, operation 607 may be continuously performed regardless of other operations of FIG. 6.

In operation 609, according to an embodiment, the electronic device 300 may increase the magnitude of the power output from the driving circuit 320 to the load circuit 330 according to the temperature information (e.g., the temperature of the target object and/or the temperature around the target object) obtained by the temperature sensor 360. The electronic device 300 may decrease the amount of power output from the driving circuit 320 to the load circuit 330 according to temperature information (e.g., the temperature of the target object and/or the temperature around the target object) obtained by the temperature sensor 360.

According to an embodiment, referring to FIG. 7, the electronic device 300 may increase the magnitude of the power (e.g., the first power of the first frequency f1) output from the driving circuit 320 to the load circuit 330 as the temperature of the target object enters section A (e.g., the temperature section below the freezing point T2) at the first time t1. For example, the electronic device 300 may control the converter 310 to increase the magnitude of the first power of the first frequency f1 output to the load circuit 330 based on identifying that the temperature of the target object decreases from more than the reference value (e.g., the freezing point T2) to the reference value (e.g., the freezing point T2) while the first power of the first frequency f1 is output. Accordingly, the magnitude of the electric field provided between the plurality of electrodes (e.g., the first electrode 221 and the second electrode 222 of FIG. 2) may increase from E4 before the first time t1 to E3 after the first time t1.

According to an embodiment, referring to FIG. 7, the electronic device 300 may increase the magnitude of the power output from the driving circuit 320 to the load circuit 330 (e.g., the first power of the first frequency f1) as it is identified that the temperature of the target object suddenly rises. When the temperature of the target object suddenly rises from less than the reference value (e.g., the freezing point T2) to the reference value (e.g., the freezing point T2), it may be said that the supercooling of the target object has failed. For example, the electronic device 300 may control the converter 310 to increase the magnitude of the first power of the first frequency f1 output to the load circuit 330 based on identifying that the temperature of the target object rises from less than the reference value (e.g., the freezing point T2) while the first power of the first frequency f1 is output. For example, in FIG. 7, the temperature of the target object may increase rapidly from less than the freezing point T2 to the freezing point T2 in section C and maintain the freezing point T2 in section D. The electronic device 300 may identify that the temperature of the target object is less than the reference value (e.g., the freezing point T2) in section B. The electronic device 300 may identify that the temperature of the target object is the reference value (e.g., the freezing point T2) in section D. For example, if the difference between the temperature of the target object and the reference value (e.g., the freezing point T2) is within a predetermined range, the electronic device 300 may identify that the temperature of the target object is the reference value (e.g., the freezing point T2). As the electronic device 300 controls the converter 310 to increase the magnitude of the first power of the first frequency f1 output to the load circuit 330, the magnitude of the electric field provided between the plurality of electrodes (e.g., the first electrode 221 and the second electrode 222 of FIG. 2) may increase from E3 before the fifth time t5 to E1 after the fifth time t5.

In operation 611, according to an embodiment, the electronic device 300 may determine the frequency (e.g., the second frequency f2) of the power to be output. In operation 613, the electronic device 300 may output the power of the determined frequency (e.g., the second frequency f2) from the driving circuit 320 to the load circuit 330. The second frequency f2 may be different from the first frequency f1.

Referring to FIG. 7, the electronic device 300 may identify that the temperature of the object (e.g., the target object) disposed between the plurality of electrodes (e.g., the first electrode 221 and the second electrode 222) exceeds the reference value (e.g., the freezing point T2) in section F after the first power of the first frequency with the increased magnitude is output to the load circuit 330 in section E. Although FIG. 7 shows that section D or section F lasts for a predetermined time or more, according to the operation of the electronic device 300, the duration of section D or section F may be relatively shorter than that of other sections, and accordingly, it may be recognized that section D or section F does not exist.

According to an embodiment, the electronic device 300 may perform operation 611 and/or operation 613 based on identifying that the temperature of the target object exceeds the reference value (e.g., the freezing point T2) after the first power of the first frequency whose magnitude has increased in section E is output to the load circuit 330.

For example, the electronic device 300 may determine the frequency of the power to be output (e.g., the second frequency (f2) based on identifying that the temperature of the target object exceeds the reference value (e.g., the freezing point T2) in section F, and output the second power of the determined second frequency from the driving circuit 320 to the load circuit 330.

For example, the electronic device 300 may output the second power of a predetermined frequency (e.g., the second frequency (f2) from the driving circuit 320 to the load circuit 330 based on identifying that the temperature of the target object exceeds the reference value (e.g., the freezing point T2) in section F. In this case, there is no limit to the time when the second frequency is determined.

According to an embodiment, the electronic device 300 may determine the second frequency (e.g., the second frequency of operation 611) based on the target object and/or the first frequency (e.g., the frequency determined in operation 603). The electronic device 300 may determine the second frequency (e.g., the second frequency of operation 611) based on the target object. The electronic device 300 may determine the second frequency (e.g., the second frequency of operation 611) based on the first frequency (e.g., the frequency determined in operation 603). For example, the electronic device 300 may determine the second frequency (e.g., the second frequency of operation 611) based on at least one of the type of the target object, the characteristics of the target object, the temperature of the target object, or the first frequency determined in operation 603. The second frequency of operation 611 may be higher or lower than the first frequency of operation 603. For example, the electronic device 300 may determine the second frequency (e.g., the second frequency of operation 611) based on the characteristics of the target object (e.g., moisture content, sugar content, hardness, and/or pH). The electronic device 300 may set the second frequency (e.g., the second frequency of operation 611) to be higher or lower than the first frequency (e.g., the frequency determined in operation 603) based on the type of the target object or the characteristics of the target object (e.g., moisture content, sugar content, hardness, and/or pH). For example, the electronic device 300 may set the first frequency when the target object is the first object and the second frequency when the target object is the second object to be identical to each other but, based on the type of the target object or the characteristics (e.g., moisture content, sugar content, hardness, and/or pH) of the target object, set the second frequency when the target object is the first object and the second frequency when the target object is the second object to be different from each other. The electronic device 300 may determine the second frequency (e.g., the second frequency of operation 611) according to the dielectric characteristic (e.g., permittivity) of the target object.

According to an embodiment, referring to FIG. 7, the electronic device 300 may output the second power of the second frequency to the load circuit 330 in section G. For example, the magnitude of the second power in section G may be smaller than the magnitude of the first power in section E and section F. For example, the magnitude of the second power in section G may be larger or smaller than, or identical to the magnitude of the first power in sections A, B, C, and D.

Referring to FIG. 7, the temperature of the target object may be lowered to less than the reference value (e.g., the freezing point T2) in section G and then maintained at a temperature less than the reference value (e.g., freezing point T5) in section H. When the temperature of the target object is maintained at a temperature (e.g., T5) less than the reference value (e.g., the freezing point T2) in section H, it may be said that the target object may be maintained in the supercooling state. When the target object maintains the supercooling state, the electronic device 300 may output power (e.g., second power) of a constant magnitude and a constant frequency (e.g., second frequency) to the load circuit 330. After outputting the second power to the load circuit 330, when subcooling of the target object fails again, the electronic device 300 may repeat operation 609, 611, and/or 613.

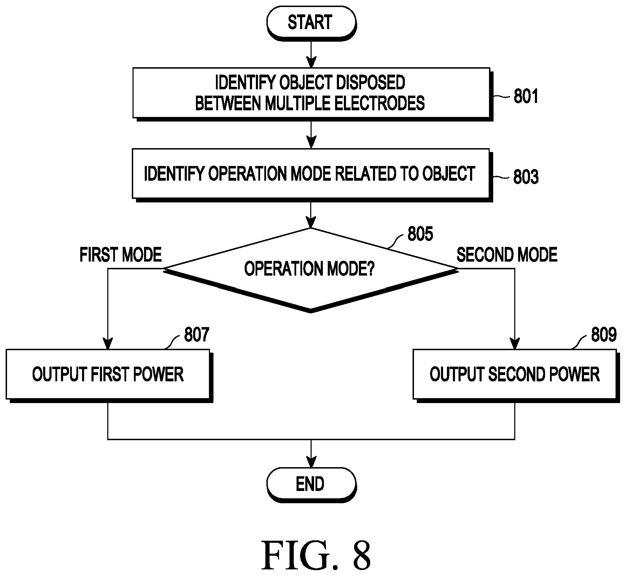

FIG. 8 is a flowchart illustrating an operation method of an electronic device according to an embodiment.

Referring to FIG. 8, an operation mode (e.g., a supercooling mode or a pre-freezing point storage mode) of the electronic device 300 may be understood.

Referring to FIG. 8, in operation 801, according to an embodiment, the electronic device 300 (e.g., the controller 350) may identify the object (e.g., the target object) disposed between the plurality of electrodes (e.g., the first electrode 221 and the second electrode 222 of FIG. 2). Operation 801 may be operation 601.

In operation 803, according to an embodiment, the electronic device 300 may identify the operation mode related to the target object. For example, the electronic device 300 may identify the operation mode related to the target object based on a user input through the interface 370. For example, the electronic device 300 may identify the operation mode related to the target object according to the object identified in operation 801 (e.g., according to the type of the object).

In operation 805, according to an embodiment, the electronic device 300 may perform operation 807 based on the operation mode related to the target object being the first mode (e.g., supercooling mode). The electronic device 300 may perform operation 809 based on the operation mode related to the target object being the second mode (e.g., pre-freezing point storage mode).

In operation 807, according to an embodiment, the electronic device 300 may output the first power corresponding to the first mode (e.g., supercooling mode) to the load circuit 330. In operation 809, according to an embodiment, the electronic device 300 may output second power corresponding to the second mode (e.g., pre-freezing point storage mode) to the load circuit 330. The magnitude of the first power in operation 807 and the magnitude of the second power in operation 809 may be different. For example, the electronic device 300 may output the first power of operation 807 or the second power of operation 809 to the load circuit 330 according to the operation mode from when the temperature of the target object exceeds the reference value (e.g., freezing point). In this case, the magnitude of the first power of operation 807 and the magnitude of the second power of operation 809 may be different. For example, the electronic device 300 may output power of a preset magnitude to the load circuit 330 regardless of the operation mode from when the temperature of the target object exceeds the reference value (e.g., freezing point) and, as the temperature of the target object falls from over the reference value (e.g., freezing point) to the reference value (e.g., freezing point), it may output power of different magnitudes to the load circuit 330 according to the operation mode. The frequency of the first power in operation 807 and the frequency of the second power in operation 809 may be the same or different.

It will be understood by one of ordinary skill in the art that the embodiments described herein may be organically applied to each other within an applicable range. For example, those skilled in the art may understand that at least some operations of an embodiment described herein may be omitted, or that at least some operations of an embodiment and at least some operations of another embodiment may be organically connected.

The polar molecules within an object may be rotated or vibrated to heat the object, maintain the supercooled state, or maintain the pre-freezing point storage state.

According to an embodiment, an electronic device (e.g., the electronic device 300) may comprise a load circuit 330 including a plurality of electrodes 221; 222, a converter 310 configured to convert a magnitude of DC power, at least one driving circuit 320 configured to output AC power to the load circuit 330 using the DC power provided from the converter 310, a temperature sensor 360 measuring a temperature of an object disposed between the plurality of electrodes 221; 222, and at least one controller 350. The at least one controller 350 may be configured to identify the object placed between the plurality of electrodes 221; 222. The at least one controller 350 may be configured to control the converter 310 and/or the at least one driving circuit 320 to output first power of a first frequency to the load circuit 330 from a time when the temperature of the object exceeds a first reference value. The at least one controller 350 may be configured to control the converter 310 and/or the at least one driving circuit 320 to increase a magnitude of the first power output to the load circuit 330 based on identifying that the temperature of the object increases from less than the first reference value to the first reference value while the first power is output.

According to an embodiment, the at least one controller 350 may be configured to control the converter 310 and/or the at least one driving circuit 320 to output second power of a second frequency different from the first frequency based on identifying that the temperature of the object exceeds the first reference value after outputting the first power whose magnitude has been increased to the load circuit 330.

According to an embodiment, the at least one controller 350 may be configured to determine the first frequency according to the object.

According to an embodiment, the at least one controller 350 may be configured to determine the second frequency according to the first frequency and the object.

According to an embodiment, the at least one controller 350 may be configured to identify an operation mode related to the object. The at least one controller 350 may be configured to control the converter 310 and/or the at least one driving circuit 320 to output the first power of a first magnitude to the load circuit 330 based on the operation mode being a first mode.

According to an embodiment, the at least one controller 350 may be configured to control the converter 310 and/or the at least one driving circuit 320 to output third power of a second magnitude different from the first magnitude to the load circuit 330 based on the operation mode being a second mode.

According to an embodiment, the at least one controller 350 may be configured to identify the operation mode based on a user input to the electronic device 300.

According to an embodiment, the at least one controller 350 may be configured to identify the operation mode according to the object.

According to an embodiment, the electronic device 300 may comprise a matching circuit 340 performing impedance matching. The at least one controller 350 may be configured to control the matching circuit 340 to perform the impedance matching in a state in which the object is disposed between the plurality of electrodes 221; 222.

According to an embodiment, the at least one controller 350 may be configured to control the converter 310 to increase a magnitude of the first power output to the load circuit 330 based on identifying that the temperature of the object decreases from more than the first reference value to the first reference value while the first power is output.

According to an embodiment, a method for operating an electronic device 300 may comprise identifying an object disposed between a plurality of electrodes 221; 222 included in a load circuit 330 of the electronic device. The method may comprise outputting first power of a first frequency to the load circuit 330 using at least one driving circuit 320 of the electronic device 300 and a converter 310 of the electronic device 300 from a time when a temperature of the object exceeds a first reference value. The method may comprise increasing the magnitude of the first power output to the load circuit 330 using the converter 310 based on identifying that the temperature of the object increases from less than the first reference value to the first reference value while the first power is output.

According to an embodiment, the method may comprise outputting second power of a second frequency different from the first frequency to the load circuit 330 using the converter 310 and/or the at least one driving circuit 320 based on identifying that the temperature of the object exceeds the first reference value after outputting the first power whose magnitude has been increased to the load circuit 330.

According to an embodiment, the method may comprise determining the first frequency according to the object.

According to an embodiment, the method may comprise determining the second frequency according to the object and the first frequency.

According to an embodiment, the method may comprise identifying an operation mode related to the object. Outputting the first power may include outputting the first power of the first magnitude to the load circuit 330 using the converter 310 and/or the at least one driving circuit 320 based on the operation mode being a first mode.

According to an embodiment, the method may comprise outputting third power of a second magnitude different from the first magnitude to the load circuit 330 using the converter 310 and/or the at least one driving circuit 320 based on the operation mode being a second mode.

According to an embodiment, identifying the operation mode may include identifying the operation mode based on a user input to the electronic device 300.

According to an embodiment, identifying the operation mode may include identifying the operation mode according to the object.

According to an embodiment, the method may comprise controlling a matching circuit 340 of the electronic device 300 to perform the impedance matching in a state in which the object is disposed between the plurality of electrodes 221; 222.

According to an embodiment, the method may comprise increasing the magnitude of the first power output to the load circuit 330 using the converter 310 based on identifying that the temperature of the object decreases from more than the first reference value to the first reference value while the first power is output.

An embodiment of the disclosure and terms used therein are not intended to limit the technical features described in the disclosure to specific embodiments, and should be understood to include various modifications, equivalents, or substitutes of an embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element. According to embodiments, each component of the above-described components may include a single entity or multiple entities. Some of the plurality of entities may be separately disposed in different components. According to embodiments, one or more of the above-described components may be omitted, or one or more other components may be added. Alternatively or additionally, a plurality of components may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by components may be carried out sequentially, in parallel, repeatedly, or heuristically, or one or more of the operations may be executed in a different order or omitted, or one or more other operations may be added.

## Claims

1. An electronic device (300), comprising:
a load circuit (330) including a plurality of electrodes (221; 222);
a converter (310) configured to convert a magnitude of DC power;
at least one driving circuit (320) configured to output AC power to the load circuit (330) using the DC power provided from the converter (310);
a temperature sensor (360) measuring a temperature of an object disposed between the plurality of electrodes (221; 222); and
at least one controller (350), wherein the at least one controller (350) is configured to:
identify the object placed between the plurality of electrodes (221; 222);
control the converter (310) and/or the at least one driving circuit (320) to output first power of a first frequency to the load circuit (330) from a time when the temperature of the object exceeds a first reference value; and
control the converter (310) and/or the at least one driving circuit (320) to increase a magnitude of the first power output to the load circuit (330) based on identifying that the temperature of the object increases from less than the first reference value to the first reference value while the first power is output.

2. The electronic device (300) of claim 1, wherein the at least one controller (350) is configured to control the converter (310) and/or the at least one driving circuit (320) to output second power of a second frequency different from the first frequency based on identifying that the temperature of the object exceeds the first reference value after outputting the first power whose magnitude has been increased to the load circuit (330).

3. The electronic device (300) of claim 1 or 2, wherein the at least one controller (350) is configured to determine the first frequency according to the object.

4. The electronic device (300) of any one of claims 1 to 3, wherein the at least one controller (350) is configured to determine the second frequency according to the first frequency and the object.

5. The electronic device (300) of any one of claims 1 to 4, wherein the at least one controller (350) is configured to:
identify an operation mode related to the object; and
control the converter (310) and/or the at least one driving circuit (320) to output the first power of a first magnitude to the load circuit (330) based on the operation mode being a first mode.

6. The electronic device (300) of any one of claims 1 to 5, wherein the at least one controller (350) is configured to control the converter (310) and/or the at least one driving circuit (320) to output third power of a second magnitude different from the first magnitude to the load circuit (330) based on the operation mode being a second mode.

7. The electronic device (300) of any one of claims 1 to 6, wherein the at least one controller (350) is configured to identify the operation mode based on a user input to the electronic device (300).

8. The electronic device (300) of any one of claims 1 to 7, wherein the at least one controller (350) is configured to identify the operation mode according to the object.

9. The electronic device (300) of any one of claims 1 to 8, further comprising a matching circuit (340) performing impedance matching, wherein the at least one controller (350) is configured to control the matching circuit (340) to perform the impedance matching in a state in which the object is disposed between the plurality of electrodes (221; 222).

10. The electronic device (300) of any one of claims 1 to 9, wherein the at least one controller (350) is configured to control the converter (310) to increase a magnitude of the first power output to the load circuit (330) based on identifying that the temperature of the object decreases from more than the first reference value to the first reference value while the first power is output.

11. A method for operating an electronic device (300), the method comprising:
identifying an object disposed between a plurality of electrodes (221; 222) included in a load circuit (330) of the electronic device;
outputting first power of a first frequency to the load circuit (330) using at least one driving circuit (320) of the electronic device (300) and a converter (310) of the electronic device (300) from a time when a temperature of the object exceeds a first reference value; and
increasing the magnitude of the first power output to the load circuit (330) using the converter (310) based on identifying that the temperature of the object increases from less than the first reference value to the first reference value while the first power is output.

12. The method of claim 11, further comprising outputting second power of a second frequency different from the first frequency to the load circuit (330) using the converter (310) and/or the at least one driving circuit (320) based on identifying that the temperature of the object exceeds the first reference value after outputting the first power whose magnitude has been increased to the load circuit (330).

13. The method of claim 11 or 12, further comprising determining the first frequency according to the object.

14. The method of any one of claims 11 to 13, further comprising determining the second frequency according to the object and the first frequency.

15. The method of any one of claims 11 to 14, further comprising identifying an operation mode related to the object, wherein outputting the first power includes outputting the first power of the first magnitude to the load circuit (330) using the converter (310) and/or the at least one driving circuit (320) based on the operation mode being a first mode.
